# EUROPEAN PATENT APPLICATION

(11) **EP 1 161 883 A1**
(43) Date of publication of application: **12.12.2001**
(21) Application number: 01202188.7
(22) Date of filing: 07.06.2001
(51) Int. Cl.: A23L 1/22, A21D 13/00, A21D 13/08

(54) **Flavoured dough systems**

(30) Priority: 07.06.2000 EP 00202026; 04.07.2000 EP 00202351
(71) Applicant: CSM Nederland B.V., 1000 AH Amsterdam (NL)
(72) Inventor: Fiammoi, Michele, 26013 Crema (CR) (IT); Stronati, Raffaele, 26013 Crema (CR) (IT); Huscroft, Simon Christopher, 28215 Bremen (DE)
(74) Representative: Jorritsma, Ruurd

(57) **Abstract**

The invention concerns dough systems and baked moulded dough systems comprising at least flour, water, leavener and bread improver ingredients and which systems also comprise an encapsulated amphiphilic flavour, as well as a method to prepare such dough systems.

## Description

Bread products are appreciated by the consumer in particular because of their flavour impression. This is also the reason why mostly bread that is prepared fresh is more appreciated than bread that has not been prepared fresh. However to prepare fresh bread every day lays a severe burden on the baker because this means that the baker has to start early in the morning every day for preparing the bread. Methods and products have been developed to overcome this problem for the baker. These efforts have resulted in Partly Baked Bread and in Ready to Bake Bread concepts, but these products still suffered from the fact that the flavour impression of the products obtained after bake off was insufficient. Although this could be partly corrected by applying higher levels of flavour in the recipe still quite a lot of the flavour components, as being rather volatile, disappeared during the parbake or later bake off. Moreover the application of higher levels of flavour also negatively affects the dough performance as the dough might become sticky and the workability of the dough becomes less. Another disadvantage of the conventional dough making process is that no flavour burst upon chewing of the baked products could be achieved. This is due to the fact that the flavour components in the conventional products are distributed in the dough in a homogeneous way, whereas for a flavour burst this distribution should be inhomogeneous.

We have studied whether we could find novel methods and novel products that could overcome the drawbacks set out above. This study resulted in the first instance in the finding that the use of encapsulated amphiphilic flavours e.g. as disclosed in US 6 045 835 could solve the above problems. US 6 045 835 does not hint at the possibility of using the encapsulated flavours described therein for flavouring dough systems. The term "amphiphilic flavours" as used throughout this document encompasses flavours which are both partially water-soluble and partially lipid-soluble, i.e. display dual solubility properties. The encapsulated amphiphilic flavours according to the invention are obtained in the form of microcapsules having a hydrogel shell and an oil core.

US 5 902 622 describes a process for producing natural, heat stable flavourings suitable for bakery applications. The flavourings are produced by extracting herb, spice, fruit, nut or other plant material with a mixture of edible oil, water and emulsifier, followed by separation of a liquid flavouring fraction which is subsequently encapsulated. The extraction process is said to extract both lipophilic and hydrophilic flavouring components. The encapsulation processes described do not yield microcapsules having a hydrogel shell and an oil core.

In a first embodiment the present invention concerns a dough system comprising at least flour, water, leavener and bread improver ingredients and wherein the dough system also comprises an encapsulated amphiphilic flavour. The encapsulated flavour component can be made by methods as disclosed in US 835. Therefore the content of this US 835 is incorporated herein by way of reference. In fact the method according to this US patent involves the following steps:
(i) a microcapsule is prepared having a hydrogel shell surrounding an oil core for retention of the oil in the shell.
(ii) An amphiphilic flavour is added in the presence of water to the microcapsule for transport into the retained oil core
(iii) This compound is transported through the hydrogel shell by aqueous diffusion
(iv) And the oil core is retained in the hydrogel shell during transportation to provide the encapsulated flavour
Subsequent dehydration of the microcapsule or crosslinking of the capsule effectively locks the flavour inside the microcapsule.

The microcapsules obtained by the above process will have a size of less than 2 mm, in particular less than 0.3 mm. These microcapsules can be applied in the dough systems without having a negative impact on the product performance. The amount of encapsulated flavour is suitably 0.01 to 10 wt %, and preferably 0.1 to 5 wt % on the flour.

The amphiphilic flavour can be any flavour that is amphiphilic according to the definition given in US '835. Typical examples being bread flavour, olive oil flavour, butter flavour, lard flavour, yeast flavour, sour dough flavour and fruit flavour. Best results are obtained with olive oil flavour, extra virgin olive oil flavour, butter flavour and bread flavour.

In a preferred embodiment of the invention the encapsulated amphiphilic flavour is obtained by a coacervation process. In such a coacervation process there is a separation into a colloid-rich phase (the coacervate) and an aqueous solution of the coacervating agent (the equilibrium agent), forming an oil coated with protein, carbohydrate, or polymeric droplets. In the process, two lipid phases, and one aqueous phase are ultimately absorbed into one lipid phase and one aqueous phase. The first lipid phase forms the microcapsule core. The core is surrounded by a hydrogel capsule, defined herein as a colloid in which the dispersed phase (colloid) has combined with the continuous phase (water) to produce a viscous jelly-like product. The second lipid phase is obtained following dispersing of the amphiphilic flavour into the water.

The hydrogel shell of the microcapsules comprised by the encapsulated flavour preferably consists essentially of a material selected from the group consisting of a protein (e.g. gelatin), a carbohydrate (e.g. gum arabic, alginate or carboxymethyl cellulose), a synthetic polymer (e.g. polyvinyl pyrollidone) and mixtures thereof.

The dough systems will comprise the usual dough ingredients in the conventional amounts. Thus the dough systems will comprise flour and on flour 45 to 75, preferably 50 to 70 and most preferably 55 to 65 wt % water 0.1 to 10 wt % leavener, preferably yeast, 0 to 3 wt % salt and 0.1 to 10 wt % of a bread improver composition.
The dough system can be any dough system i.e. this system can either be a crude dough or a partly baked dough or a fermented dough system.
The dough system will have a specific volume that is increased with 0 to 250, preferably with 10 to 200, most preferable with 50 to 100 vol % compared with a dough system containing the same ingredients but that has not been rested and / or fermented.

Preferred dough systems are moulded frozen dough systems, in particular frozen, partly fermented, partly baked dough systems.

The bread improver composition present in the dough can contain the well known bread improver ingredients i.e. one or more ingredients selected from the following group of ingredients: bread improving enzymes, anti-oxidants, emulsifiers, thickeners, malt extract, all malted flour, soy bean flour, sugars, rye flour fractions, wheat flour fractions, fat and milk ingredients (lactose, whey permeate, whey milk, skimmed milk, wholemilk), stabilizer agents (Sodium and Calcium phosphate); acids, bases and salt (acetic acid and salt, lactic acid and salt, malic acid and salt, tartaric acid and salt, carbonate salt, sulphate salt). Suitable bread improving enzymes are selected from the group consisting of: amylase, xylanase, oxidases glucosoxidase, catalase, peroxidase, hexoseoxidase, amyloglucosidase, lypoxigenase protease, lipase.
Emulsifiers that can be applied are DATEM- esters, mono and diglycerides, lecithins, SSL, CSL.
As anti-oxidants ascorbic acid and vitamin E can be used in the doughs according to the invention. Useful thickeners are thickers with a high water absorbing capacity. Examples thereof are starch, modified starches, guar gum, pectin, gelatin, bean flour, lupine flour, wheat gluten, pregelatinized flour, xanthan gum, carboxymethyl-cellulose and no time dough ingredients such as L-cysteine, glutathione.

The bread improver composition can be added in any format that is available. Thus this composition can be either liquid, or a micronised powder or an extrudate or a shortening.

The dough can be moulded into the desired form in the usual ways. Preferred moulded doughs can also be sheeted or laminated doughs and doughs suitable for making a baguette or french bread or other shapes appropriate to the specific market. The laminated doughs will have 2 to 84, preferably 4 to 32 fat layers.
The moulded doughs can also be provided with a filling such as a chocolate or a savoury filling. In this way filled baked bread products can be obtained.

Part of the invention are also the bread products that are obtained after baking of a moulded dough product according to the invention.

The doughs according to the invention can be obtained by conventional process techniques for the dough making. The exact processing will depend on the type of product that is desired. I.e. for a crude dough another conventional process will be used than for the preparation of a frozen Rtb or a frozen parbaked dough.
The processing in fact can be summarized as a process for the preparation of a dough system according to the invention wherein the dough ingredients: flour, water, emulsifier, bread improver composition, leavener and optionally salt are mixed in the conventional way in amounts corresponding with the amounts required for the different desired products whereupon the premix so obtained is rested for 0 to 60 minutes at 20 to 40 °C and the dough is either moulded or laminated or proofed or frozen as required for the final product (i.e.; for the preparation of a crude dough, a Ready to Bake dough, or a partly baked dough), whereupon the product so obtained is baked, optionally after thawing, to obtain a final baked bread product or a partly baked bread product that still has to be baked off.

### EXAMPLE

A baguette dough was made from the components as mentioned in the table below using the conditions indicated
In the table the dough preparation according to the invention containing the amphiphili encapsulated flavour is disclosed while the comparative doughs were prepared without flavour and with non encapsulated flavour.

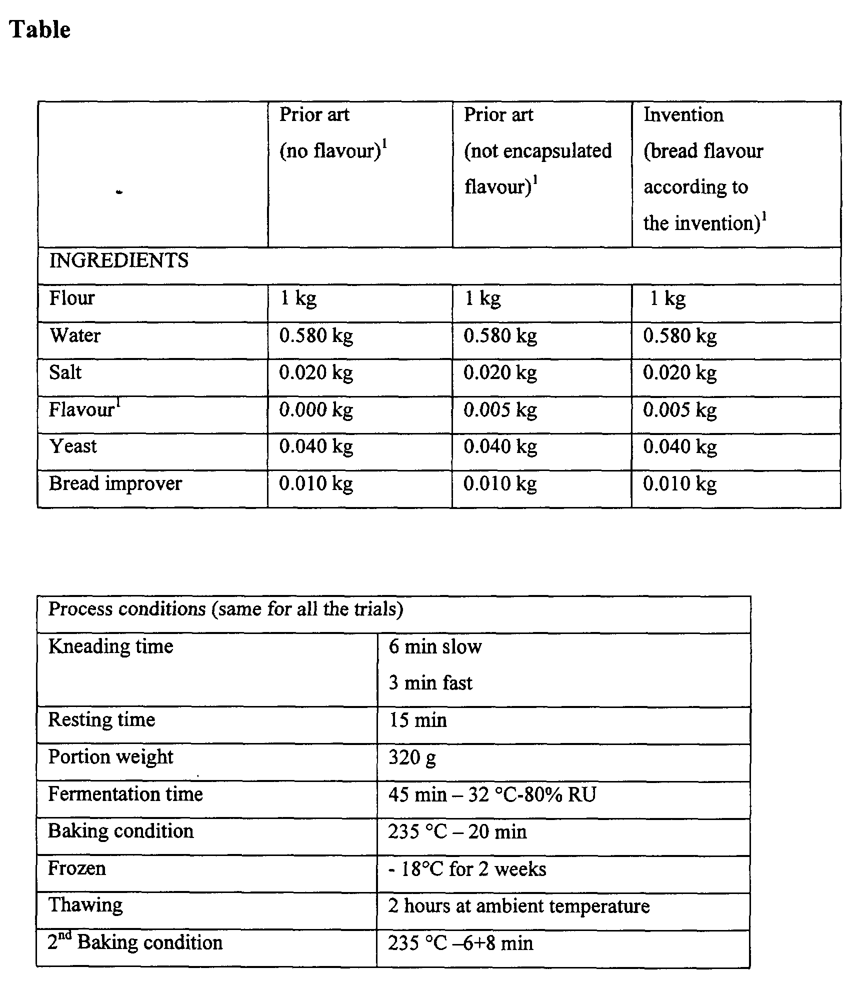

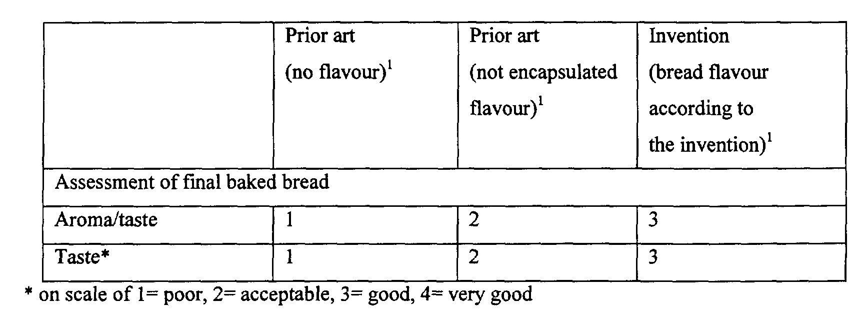

In the final baked product using an encapsulated bread flavour a persistent aroma and flavour/taste is provided, due to the use of the encapsulated particular components according to the invention.

## Claims

1. Dough system comprising at least flour, water, leavener and bread improver ingredients wherein the dough system also comprises an encapsulated amphiphilic flavour.

2. Dough system according to claim 1 wherein the dough system comprises flour and on flour 45 to 75, preferably 50 to 70 and most preferably 55 to 65 wt % water; 0.1 to 10 wt % leavener, preferably yeast, 0 to 3 wt % salt and 0.1 to 10 wt % of a bread improver composition.

3. Dough system according to claims 1 and 2 wherein the dough system is a crude dough or a partly baked dough or a fermented dough system.

4. Dough system according to claim 3 wherein the dough system is a moulded frozen dough system, in particular a frozen, partly fermented , partly baked dough system.

5. Dough system according to claims 1 to 4 wherein the dough system comprises 0.01 to 10 wt % , preferably 0.1 to 5 wt % of the encapsulated amphiphilic flavour.

6. Dough system according to claims 1 to 5 wherein the encapsulated flavours have a size of less than 2 mm, preferably less than 0.3 mm.

7. Dough system according to claims 1 to 6 wherein the encapsulated amphiphilic flavour comprises microcapsules having a hydrogel shell and an oil core.

8. Dough system according to claims 1 to 7 wherein the amphiphilic flavour is selected from the group consisting of bread flavour, olive oil flavour, butter flavour, lard flavour, yeast flavour and sour dough flavour.

9. Dough system according to claims 1 to 8 wherein the dough system is a laminated dough with 2 to 84, preferably 4 to 32 fat layers.

10. Baked bread products as obtained after baking of a moulded dough system with the composition according to claims 1 to 9.
